# EUROPEAN PATENT SPECIFICATION

(11) **EP 0 480 491 B1**
(45) Date of publication and mention of the grant of the patent: **19.01.2000**
(21) Application number: 91202365.2
(22) Date of filing: 17.09.1991
(51) Int. Cl.: B01D 35/18, B01D 29/39

(54) **PROCESS AND PLANT FOR TREATING WASTE LIQUIDS**
VERFAHREN UND ANLAGE ZUR BEHANDLUNG VON ABFALLFLÜSSIGKEITEN
PROCEDE ET INSTALLATION DE TRAITEMENT DE LIQUIDES RESIDUAIRES

(30) Priority: 09.10.1990 NL 9002196
(43) Date of publication of application: 15.04.1992
(73) Proprietor: Groot, Theodorus Cornelis, NL-5491 ZD Sint-Oedenrode (NL)
(72) Inventor: Groot, Theodorus Cornelis, NL-5491 ZD Sint-Oedenrode (NL)
(74) Representative: Van kan, Johan Joseph Hubert, Ir.

(56) References cited:
- EP-A- 0 097 589
- FR-A- 1 562 291
- NL-A- 6 400 502
- US-A- 3 366 158
- US-A- 3 482 702

## Description

The present invention relates to a method for treating a heated slurry in which method the slurry is separated into liquid and a product with a higher dry substance content than the slurry to be treated, by in situ forming a layer of solid material by accumulation said solid material on a wall of a hollow filter member, maintaining an underpressure at the interior of the hollow filter member, compared to the slurry side, as a result of which liquid is withdrawn from the interior of the hollow filter member and discharged therefrom. Furthermore the present invention relates to a plant for treating a slurry, in which plant the slurry is separated into liquid and a product with a higher dry substance content than the slurry to be treated, comprising a filter member, heat exchangers, means for withdrawing liquid, means for maintaining an underpressure on the vapour side of said filter member.

GB-A-1 037 132 relates to a process for the dehydration of liquids in which process liquid is caused to flow along and in contact with one side of an easily renewable, selectively permeable layer, which layer is formed in situ by accumulation of solid organic hydrophilic material and a relatively low vapour pressure is maintained at the other side of the selectively permeable layer. The liquid to be dehydrated is of vegetable or animal origin, especially fruit juice or vegetable juice. The final product obtained by this method will generally contain 40-60% water. In this method the filters get clogged after some time as a result of which the process has to be interrupted for cleaning purposes.

Furthermore, in evaporation processes it is difficult to obtain a solid material because in the last phase of the process when the content of dry substance has become comparatively large, the applied thermal energy reaches the evaporation surface with difficulty only since the concentrated liquid hinders the circulation and hence impedes the thermal transport. This disadvantage applies to a more considerable extent to liquids which are substantially stationary, since liquids in general are poor thermal conductors.

The object of the present invention is to provide a method for treating a slurry in which method a product with a dry substance of more than 90% can be obtained. Another object of the present invention is to provide a method for treating a slurry in which method a very efficient use is made of the energy to be applied which is necessary for the separation of the slurry into liquid and a product with a higher dry substance content than the slurry to be treated.

According to the invention, a method for treating a slurry in which method the slurry is separated into liquid and a product with a higher dry substance content than the slurry to be treated is characterized in that the hollow filter members (3) and condensors (7) for heating said slurry are accommodated in the heated slurry (2) and that the method is carried out in a batch wise mode wherein said slurry is in constant contact with the layer of solid material accumulated on the filter wall thereby enabling to reach a dry-substance content of more than 90% during which method said layer will increase in thickness, the temperature of the heated slurry (2) is below its boiling temperature at the prevailing pressure of the heated slurry, and that the pressure in the interior of the hollow filter members (3) is decreased to such a level that the liquid present in the filter wall (14, 15) and in the deposit of the solid porous material deposited thereon (10) starts boiling at the boiling temperature belonging to the prevailing reduced pressure therein, said boiling temperature being lower than the temperature of the heated slurry outside the filter wall (14, 15) and outside the deposit of the solid porous material deposited thereon (10), and the vapour thus obtained is withdrawn from the interior of the hollow filter member (3) and subsequently the deposited solid porous material (10) is removed from the outside of the hollow filter member (3).

The term "slurry" is to be understood to mean a waste product which is released in an industrial process or a process which is comparable therewith and which comprises a liquid in which solid and optionally gaseous constituents are present in a dissolved or non-dissolved state, and which slurry, upon abstracting the liquid therefrom, forms a solid porous material, being a product with a higher dry substance content than the slurry to be treated, which comprises the solid constituents of the slurry which remains permeable to the vapour of the liquid.

Such slurry or waste liquids may include a wide variety of industrial waste liquids. To be considered notably in this respect is semi-liquid manure, hereinafter referred to as slurry, which originates from intensive cattle-breeding farms, for example, pig farms; furthermore, waste liquids of the processing of potatoes, sugar beets, maize; in addition, sewage sludge and other types of slurry.

When the method according to the invention is carried out correctly, the hollow filter member with the deposit of solid porous material formed thereon serves as a body which does not pass the liquid and the solid constituents of the waste liquid present therein, but does pass the pure vapour of the liquid.

It is to be noted that in the beginning of the method according to the invention liquid may be passed when insufficient material has deposited on the filter member. This first resulting liquid comprises dissolved solid constituents present in the waste liquid and may not be considered a product of the method according to the invention. However, after some time - depending on the concentration and the nature of the solid constituents present in the waste liquid and further on the drop of pressure in the layer of solid material deposited on the filter wall - the boiling-point will drop, as a result of which the liquid in the layer starts boiling. When the resistance to permeability for liquid is sufficiently high, the seeping liquid will evaporate completely in the layer deposited on the filter wall, as a result of which exclusively vapour of the liquid will land in the interior of the hollow filter body. Solid, dissolved constituents in the waste liquid will remain in the deposit, and optionally in the filter wall.

In a simple embodiment of the method according to the invention the slurry is heated directly from the exterior and the transported vapour is made to condense outside the slurry and is further transported. However, considerable thermal energy is lost in this manner.

According to a preferred embodiment of the invention the vapour obtained in the first step, after having been removed from the hollow filter member (3) is compressed to a higher pressure with rise in temperature of the vapour, after which vapour is transported to condensors (7), in which the vapour condenses, and the condensed vapour is drawn off via an outlet (8).

As a result of this, energy is applied to the vapour, as a result of which the temperature of the vapour, which is now unsaturated, rises. The said vapour is then guided to condensors which are present in the waste liquid. By a suitable choice of the process conditions it may be achieved that the vapour condenses in the condensor. In this connection it is to be noted that the vapour of the liquid will condense when the temperature of the inner wall of the condensor lies below the dew point associated with the prevailing pressure of the vapour. The released thermal energy will heat the waste liquid. In this manner a very efficient use is made of the energy to be applied which is necessary for the separation of the waste liquid into liquid and a product with a higher dry substance content than the waste liquid to be treated. In addition to the compressed vapour, extra energy, for example, vapour of the liquid of an external source may be guided to the condensors for extra heating of the waste liquid. If no extra heating is necessary, non-condensed vapour, if any, will leave the condensor via the outlet.

In this cycle the pressure of the removed vapour is preferably compressed to atmospheric pressure. The technical construction of the required apparatus may be kept as simple as possible at this pressure, while the condensed liquid can also be drained and collected in a simple manner.

The liquid obtained in the method according to the present invention is suitable for direct reuse. The solid porous material deposited on the filter members may serve as a material for the manufacture of the filter walls to be used in the method.

In aqueous waste liquids it may be of an economical advantage first to concentrate the waste liquid in any conventional manner to a solid content of, for example, 25%, for example, in vacuum pans, before subjecting it to the invention.

A filter member suitable for the method of the invention comprises an omnilaterally closed hollow filter member which comprises an outlet aperture and which can withstand an under-pressure to be maintained therein and at least one wall of which is constructed as a filter.

As filter materials are to be considered the conventionally used materials which are suitable to separate constituents which have not dissolved in liquids from the liquid phase, for example, a filter cloth. An example of another suitable material is the material which is deposited on the filter wall in the method according to the present invention.

Such a hollow filter member is not restricted to a given shape. For example, it is substantially cylindrical. However, a rectangular construction which is as thin as possible is to be preferred so as to obtain a maximum ratio between the vapour-passing surface area and the contents of the hollow filter member. In such a flat-box construction measures should be taken to prevent the construction from collapsing under the influence of the underpressure, for example, a number of spacer elements.

Such a result can be reached in a variety of manners, for example, by providing a number of gratings in the interior of the box which are staggered with respect to each other, or by filling them with synthetic resin grains.

According to a preferred form of the flat-box construction the hollow filter member comprises a framework of profiled elements, for example, of tube having a rectangular cross-section, which framework is covered with a metal wire gauze which on the side remote from the inner space is covered with filter cloth, the inner space being filled with a material which passes vapour and liquid and which keeps the wire gauze at a distance.
In general, right at the beginning of the performance of the method according to the invention, such a construction will not be impermeable to liquid of the waste liquid, but, according as more solid constituents start to deposit on the filter cloth, the permeability to liquid will gradually stop until only vapour is passed.

In a further preferred embodiment of the flat-box construction the walls of the box are formed by plates which consist of the solid porous material which is formed according to the method of the invention. Then such plates have a sufficient thickness, the flat boxes thus formed will, already at the beginning of the method according to the invention, be permeable to the vapour of the liquid of the waste liquid and will not be permeable to the liquid itself. Such a choice of the material will speed up the separation of the waste liquid into pure liquid and solid porous material.

The invention further relates to a plant for performing the method according to the invention. This part of the invention comprises a container for receiving the waste liquid, in which one or more omnilaterally closed hollow filter members according are placed the outlet aperture of which is connected to a duct which leads to an underpressure pump the outlet aperture of which is connected to a duct which leads to condensors accommodated in the container in the proximity of the hollow filter members, and which condensors are connected to ducts leading outside the container for transporting the pure liquid formed in the condensors, and which plant is optionally connected to means 6A for supplying extra energy.

The condensors to be used in the plant according to the invention may be of the conventional type.

According to a preferred embodiment the condensors in the plant according to the invention are accommodated in the container at regular distances from each other and the hollow filter members are interposed therebetween, also at regular distances.

According to a further preferred embodiment of the plant according to the invention the hollow filter members are of the flat-box construction as described hereinbefore. It is furthermore of advantage when the said boxes occupy substantially the full width of the container of the plant and the condensors also have a flat construction, to be compared with heating radiators, having an area which is substantially equal to that of a flat-box construction. In this manner an optimum heat transfer from the condensors to the waste liquid is produced. Furthermore, it is favourable for an as high as possible efficiency of the plant when the ratio of the volume of the waste liquid to be treated to the sum of the volumes of the hollow filter bodies and the condensors is as large as possible. From this consideration it is recommendable for the thickness of the hollow filter members and the flat condensors to be as small as possible. Good results have been obtained with a thickness between 0.3 cm and 1.0 cm. The spacing between the outer wall of a condensor and the outer wall of a hollow filter member with a flat-box construction is preferably between 3 cm and 10 cm. In the case of larger spacings the quantity of the thermal transport decreases.

It may further be useful to arrange the hollow filter members and the condensors so as to be movable with respect to each other. This provides the possibility of readjusting the distance between the hollow filter members and the condensors according as the thickness of the deposited layer on a hollow filter member increases.

The various described aspects of method, plant and hollow filter member according to the invention are in general of importance in industrial processes in which waste liquids having a high content of solid material have to be dried by supplying thermal energy. In such liquids the thermal transport to the evaporation surface is impeded by the internal resistance to circulation flows. The invention provides a solution to this problem. The invention is of particular importance for the processing of aqueous waste liquids, in particular of slurry of intensive cattle-breeding, for example, slurry of pigs, poultry and cows. In this case the water recovered according to the invention may be used as drinking water for the cattle. The dry material which is also obtained and which comprises all the solid matter of the slurry, is suitable for use as manure, for example, after having been processed to grains. The further advantage of the invention is that it is suitable for use on a small scale, for example, in a farm, and that in this case the cost of transporting slurry to places where this may be processed, is avoided.

The invention may also be used readily for the treatment of sewage water and sewage sludge. The water obtained in this case may be supplied directly to the environment.

### DESCRIPTION OF THE FIGURES

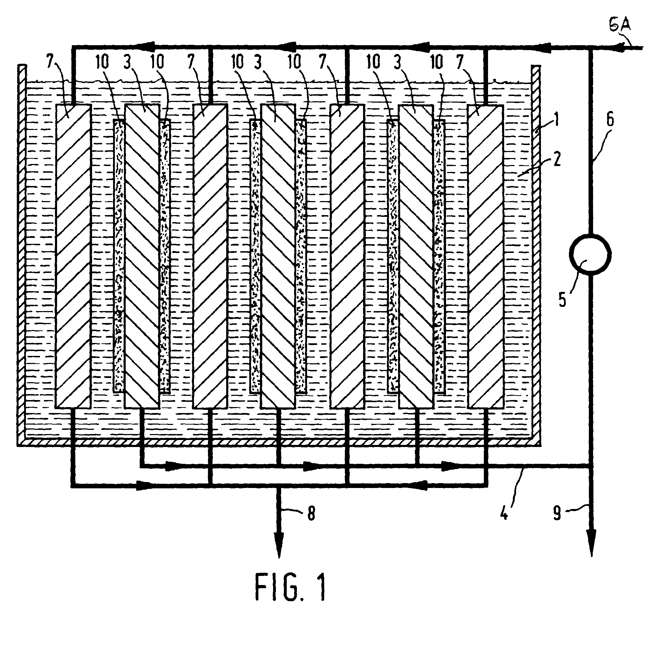

Figure 1 is a diagrammatic cross-sectional view in a side elevation of a plant according to the invention.
   In this Figure, reference numeral 1 denotes an open container which comprises the slurry 2. The hollow filter members according to the invention are referenced 3. They are connected to an underpressure pump 5 by the conduits 4. Conduit 6 extends from the underpressure pump 5 to the condensors 7. Conduit 6A optionally provides extra energy to the condensor in the form of external vapour. The conduits for transporting the condensed pure liquid (and optionally non-condensed vapour) are denoted by 8. Reference numeral 9 denotes the outlet duct of the first resulting liquid. Reference numeral 10 denotes a layer of solid constituents of the slurry deposited on a hollow filter member.

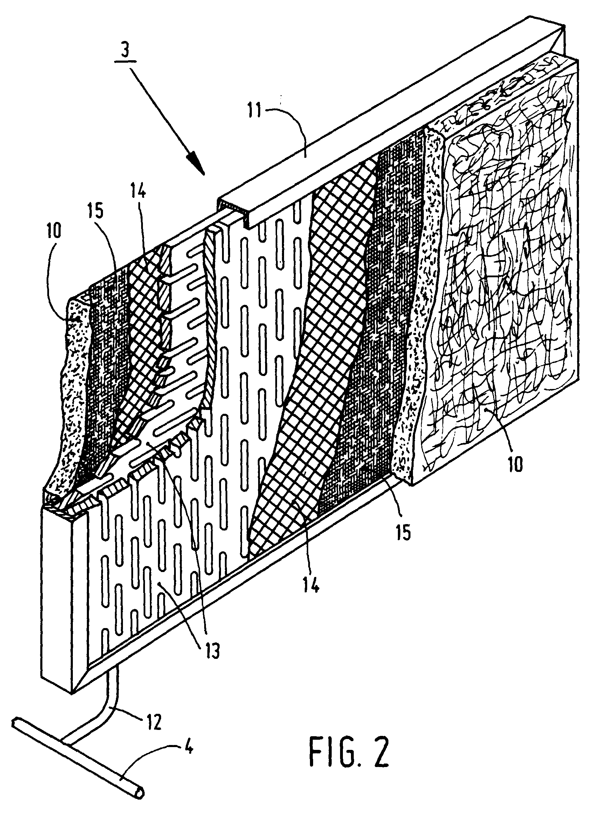

Figure 2 is a diagrammatic perspective view of a hollow filter member. Reference numeral 11 denotes the framework having U-shaped profile. Reference numeral 12 denotes the outlet aperture to the transport conduit 4 in Figure 1. Reference numeral 13 denotes two vapour and liquid-passing gratings the apertures of which overlap each other. They also keep the filter walls consisting of a layer of metal wire gauze 14 and a layer of filter cloth 15 spaced apart.

### EXAMPLE

About 6200 Kg of slurry having a dry-material content of about 10% was evaporated in the conventional manner to a weight of 2470 Kg having a dry-materialcontent of 25%.

1.09 m³ of slurry of 95° C thus concentrated were transferred to an open stainless steel container 1 having dimensions of 115 x 100 x 120 cm. 12 Flat filter members 3 were dipped vertically in this container parallel to each other. The framework 11 thereof consisted of a U-profiled member having a cross-section of 0.75 x 0.75 cm and dimensions 100 x 100 cm. The framework surrounded two gratings 13 which were placed so as to be staggered with respect to each other and each had a thickness of 0.25 cm. The framework had a stainless steel wire gauze 14 having a mesh width of 1 mm and was omnilaterally covered with filter cloth 15 having a thickness of 0.2 mm. Outlet 12 was positioned on the outside and was connected, via a conduit 4, to an underpressure pump 5 which was present outside the container. The outlet aperture of the pump was connected by means of conduits 6 to flat condensors 7 (13 pieces) positioned on either side of the filter members and having dimensions of 100 x 100 x 0.7 cm. The spacing between the walls of the filter members and the condensors was 4 cm. The overall volume of hollow filter members and condensors in the container was 0.181 m3. The insides of the filter members were brought at an absolute pressure of 0.3 atm by means of the underpressure pump 5. Initially, a brown liquid was pumped from the filter members through transport duct 9 because the filter members still passed liquid of the slurry in the initial phase. This first resulting liquid could be used as rinsing liquid in the stables.

When the layers 10 deposited on the filter members had reached a thickness of 0.6 cm, the flow of liquid stopped and only vapour passed through. This vapour transported by the underpressure pump 5 was compressed to atmospheric pressure by the same pump. As a result of this the temperature of the vapour rose. Said vapour was applied to the condensors 7 where it condensed to pure water.

The volume of the slurry in the container was kept at the desired level by fresh additions of hot slurry having a dry-substance content of 25%.

Totally 2472 kg of slurry having a dry-substance content of 25% were processed in the above-described manner. 650 kg of porous solid were obtained herefrom having a dry-substance content of 95% and a specific gravity of 0.6 kg/dm³ and 1822 kg of water in a period of time of approximately 127 hours.

## Claims

1. A method for treating a heated slurry in which method the slurry is separated into liquid and a product with a higher dry-substance content than the slurry to be treated, by in situ forming a layer of solid material by accumulation said solid material on a wall of a hollow filter member, maintaining an underpressure at the interior of the hollow filter member, compared to the slurry side, as a result of which liquid is withdrawn from the interior of the hollow filter member and discharged therefrom, characterized in that the hollow filter members (3) and condensors (7) for heating said slurry are accommodated in the heated slurry (2) and that the method is carried out in a batch wise mode wherein said slurry is in constant contact with the layer of solid material accumulated on the filter wall thereby enabling to reach a dry-substance content of more than 90% during which method said layer will increase in thickness, the temperature of the heated slurry (2) is below its boiling temperature at the prevailing pressure of the heated slurry, and that the pressure in the interior of the hollow filter members (3) is decreased to such a level that the liquid present in the filter wall (14, 15) and in the deposit of the solid porous material deposited thereon (10) starts boiling at the boiling temperature belonging to the prevailing reduced pressure therein, said boiling temperature being lower than the temperature of the heated slurry outside the filter wall (14, 15) and outside the deposit of the solid porous material deposited thereon (10), and the vapour thus obtained is withdrawn from the interior of the hollow filter member (3) and subsequently the deposited solid porous material (10) is removed from the outside of the hollow filter member (3).

2. A method as claimed in claim 1, characterized in that the vapour obtained in the first step, after having been removed from the hollow filter member (3) is compressed to a higher pressure with rise in temperature of the vapour after which vapour is transported to condensors (7) accomodated in the slurry, in which the vapour condenses, and the condensed vapour is drawn off via an outlet (8).

3. A plant for treating a slurry, in which plant the slurry is separated into liquid and a product with a higher dry substance content than the slurry to be treated, comprising a filter member, condensors, means for withdrawing liquid, means for maintaining an underpressure on the vapour side of said filter member, characterized in that, said filter members (3) are accomodated in a container (1) for receiving the slurry (2), an outlet aperture of the vapour side of said filter member (3) is connected to a conduit (4) which leads to a compressor (5), the outlet aperture of said compressor (5) is connected to a conduit (6) which leads to condensors (7) accomodated in the container (1), said condensors (7) are connected to conduits (8) leading outside the container (1) for transporting the condensed vapour formed in the condensors (7), and which plant is optionally connected to means 6A for supplying extra energy.

4. A plant as claimed in claim 3, characterized in that the condensors (7) are arranged in the container (1) at regular distance with respect to each other and that the hollow filter members (3) are placed therebetween.

5. A plant as claimed in claim 3, characterized in that the hollow filter members (3) and the condensors (7) have a thickness of 0,3-1,0 cm and that the distance from the outer wall of a hollow filter member (3) to the outer wall of a subsequent condensor (7) lies between 3 cm and 10 cm.

6. A plant as claimed in any of the claims 3-5, characterized in that the hollow filter members (3) and the condensors (7) are arranged in the container (1) so as to be movable with respect to each other.

## Patentansprüche

1. Verfahren zum Behandeln eines erhitzten Schlammes, bei dem der Schlamm in eine Flüssigkeit und ein Produkt mit einem höheren Trockensubstanzanteil als der zu behandelnde Schlamm getrennt wird, durch in situ Ausbilden einer Schicht aus festem Material durch Ansammeln des festen Materiales auf einer Wand eines Hohlfilterelementes, Aufrechterhalten eines Unterdrucks am Inneren des Hohlfilterelementes im Vergleich zur Schlammseite, wodurch Flüssigkeit vom Inneren des Hohlfilterelementes abgezogen und hiervon abgeführt wird, dadurch gekennzeichnet, daß die Hohlfilterelemente (3) und Kondensatoren (7) zum Erhitzen des Schlammes im erhitzten Schlamm (2) untergebracht werden, daß das Verfahren chargenweise durchgeführt wird, wobei der Schlamm in konstantem Kontakt mit der Schicht des auf der Filterwand angesammelten festen Materiales gehalten wird, um auf diese Weise einen Trockensubstanzanteil von mehr als 90 % zu erreichen, wobei die Dicke der Schicht während des Verfahrens ansteigt und die Temperatur des erhitzten Schlammes (2) beim vorherrschenden Druck des erhitzten Schlammes unter dessen Siedetemperatur liegt, daß der Druck im Inneren der Hohlfilterelemente (3) auf ein solches Niveau abgesenkt wird, daß die in der Filterwand (14, 15) und in der Ablagerung des darauf (10) abgelagerten festen porösen Materiales befindliche Flüssigkeit bei der Siedetemperatur, die zum vorherrschenden reduzierten Druck darin gehört, zu sieden beginnt, wobei die Siedetemperatur geringer ist als die Temperatur des erhitzten Schlammes außerhalb der Filterwand (14, 15) und außerhalb der darauf abgelagerten Ablagerung des festen porösen Materiales (10), und daß der auf diese Weise erhaltene Dampf vom Inneren des Hohlfilterelementes (3) abgezogen und danach das abgelagerte feste poröse Material (10) von der Außenseite des Hohlfilterelementes (3) entfernt wird.

2. Verfahren nach Anspruch 1, dadurch gekennzeichnet, daß der im ersten Schritt erhaltene Dampf nach der Entfernung vom Hohlfilterelement (3) mit einem Temperaturanstieg des Dampfes auf einen höheren Druck komprimiert wird, wonach der Dampf im Schlamm untergebrachten Kondensatoren (7) zugeführt wird, in denen der Dampf kondensiert, und daß der kondensierte Dampf über einen Auslaß (8) abgezogen wird.

3. Anlage zur Behandlung eines Schlammes, bei dem der Schlamm in eine Flüssigkeit und ein Produkt mit einem höheren Trockensubstanzanteil als der zu behandelnde Schlamm getrennt wird, mit einem Filterelement, Kondensator, Einrichtungen zum Abziehen der Flüssigkeit und Einrichtungen zum Aufrechterhalten eines Unterdrucks auf der Dampfseite des Filterelementes, dadurch gekennzeichnet, daß die Filterelemente (3) in einem Behälter (1) zur Aufnahme des Schlammes (2) untergebracht sind, daß eine Auslaßöffnung der Dampfseite des Filterelementes (3) an eine Leitung (4) angeschlossen ist, die zu einem Kompressor (5) führt, daß die Auslaßöffnung des Kompressors (5) an eine Leitung (6) angeschlossen ist, die zu im Behälter (1) untergebrachten Kondensatoren (7) führt, daß die Kondensatoren (7) an Leitungen (8) angeschlossen sind, die zur Außenseite des Behälters (1) führen, um den in den Kondensatoren (7) gebildeten kondensierten Dampf zu fördern, und daß die Anlage wahlweise an Einrichtungen (6A) zum Zuführen von Extraenergie angeschlossen ist.

4. Anlage nach Anspruch 3, dadurch gekennzeichnet, daß die Kondensatoren (7) im Behälter (1) in regelmäßigen Abständen relativ zueinander angeordnet sind und daß die Hohlfilterelemente (3) dazwischen angeordnet sind.

5. Anlage nach Anspruch 3, dadurch gekennzeichnet, daß die Hohlfilterelemente (3) und die Kondensatoren (7) eine Dicke von 0,3-1,0 cm besitzen und daß der Abstand von der Außenwand eines Hohlfilterelementes (3) bis zur Außenwand eines nachfolgenden Kondensators (7) zwischen 3 cm und 10 cm beträgt.

6. Anlage nach einem der Ansprüche 3 bis 5, dadurch gekennzeichnet, daß die Hohlfilterelemente (3) und die Kondensatoren (7) so im Behälter (1) angeordnet sind, daß sie relativ zueinander bewegbar sind.

## Revendications

1. Procédé de traitement d'une suspension chauffée, dans lequel la suspension est séparée en un liquide et un produit ayant une plus grande teneur en substance sèche que la suspension à traiter, par formation in situ d'une couche d'un matériau solide par accumulation du matériau solide sur une paroi d'un organe creux de filtre, par maintien d'une dépression à l'intérieur de l'organe creux de filtre, par rapport au côté de la suspension, si bien que le liquide est extraite par l'intérieur de l'organe creux de filtre et évacué par celui-ci, caractérisé en ce que les organes creux (3) de filtre et des condenseurs (7) destinés à chauffer la suspension sont logés dans la suspension chauffée (2), et en ce que le procédé est mis en oeuvre en mode discontinu dans lequel la suspension est en contact constant avec la couche du matériau solide accumulé sur la paroi du filtre et permet ainsi d'atteindre une teneur en substance sèche dépassant 90 %, et, pendant la mise en oeuvre du procédé, la couche a une épaisseur qui augmente, la température de la suspension chauffée (2) est inférieure à sa température d'ébullition à la pression régnante de la suspension chauffée, et la pression à l'intérieur des organes creux de filtre (3) est réduite à une valeur telle que le liquide présent dans la paroi de filtre (14, 15) et dans le dépôt du matériau solide poreux formé sur elle (10) commence à bouillir à la température d'ebullition à la pression régnante réduite là-dedans, la température d'ébullition étant inférieure à la température de la suspension chauffée en dehors de la paroi du filtre (14, 15) et en dehors du dépôt du matériau solide poreux déposé sur elle (10), et la vapeur ainsi obtenue est extraite de l'intérieur de l'organe creux (3) de filtre, puis le matériau solide poreux déposé (10) est retiré de l'extérieur de l'organe creux de filtre (3).

2. Procédé selon la revendication 1, caractérisé en ce que la vapeur obtenue dans la première étape, après extraction de l'organe creux (3) de filtre, est comprimée à une pression plus élevée avec élévation de la température de la vapeur, puis la vapeur est transportée à des condenseurs (7) logés dans la suspension et dans lesquels la vapeur se condense, et la vapeur condensée est extraite par une sortie (8).

3. Installation de traitement d'une suspension, dans laquelle la suspension est séparée en un liquide et un produit ayant une plus grande teneur en substance sèche que la suspension à traiter, comprenant un organe de filtre, des condenseurs, un dispositif d'extraction de liquide, et un dispositif de maintien d'une dépression du côté de la vapeur de l'organe de filtre, caractérisée en ce que les organes de filtre (3) sont logés dans un récipient (1) destiné à contenir la suspension (2), un orifice de sortie du côté de vapeur de l'organe de filtre (3) est raccordé à un conduit (4) qui rejoint un compresseur (5), l'orifice de sortie du compresseur (5) est raccordé à un conduit (6) qui rejoint les condenseurs (7) logés dans le récipient (1), les condenseurs (7) sont raccordés à des conduits (8) qui rejoignent l'extérieur du récipient (1) pour le transport de la vapeur condensée formée dans les condenseurs (7), et l'installation est raccordée éventuellement à un dispositif (6A) destiné à fournir une quantité supplémentaire d'énergie.

4. Installation selon la revendication 3, caractérisée en ce que les condenseurs (7) sont placés dans le récipient (1) à une distance régulière les uns des autres, et les organes creux de filtre (3) sont placés entre eux.

5. Installation selon la revendication 3, caractérisée en ce que les organes creux de filtre (3) et les condenseurs (7) ont une épaisseur comprise entre 0,3 et 1,0 cm, et la distance comprise entre la paroi externe d'un organe creux de filtre (3) et la paroi externe d'un condenseur suivant (7) est comprise entre 3 et 10 cm.

6. Installation selon l'une quelconque des revendications 3 à 5, caractérisée en ce que les organes creux (3) de filtre et les condenseurs (7) sont placés dans le récipient (1) afin qu'ils soient mobiles mutuellement.
